# EUROPÄISCHE PATENTSCHRIFT

(11) **EP 1 200 225 B1**
(45) Veröffentlichungstag und Bekanntmachung des Hinweises auf die Patenterteilung: **28.05.2003**
(21) Anmeldenummer: 00926872.3
(22) Anmeldetag: 12.04.2000
(51) Int. Cl.: B23K 26/08

(54) **VORRICHTUNG ZUM SCHNEIDEN VON MATERIALBAHNEN AUS PAPIER ODER KUNSTSTOFF**
DEVICE FOR CUTTING MATERIAL WEBS CONSISTING OF PAPER OR SYNTHETIC MATERIAL
DISPOSITIF POUR COUPER DES BANDES DE PAPIER OU DE MATIERE PLASTIQUE

(30) Priorität: 24.06.1999 DE 19928848
(43) Veröffentlichungstag der Anmeldung: 02.05.2002
(73) Patentinhaber: Sator Laser GmbH, 22525 Hamburg (DE)
(72) Erfinder: SATOR, Alexander, P., D-20251 Hamburg (DE); WINDELBERG, Christoph, D-22307 Hamburg (DE)
(74) Vertreter: Graalfs, Edo, Dipl.-Ing.
(86) Internationale Anmeldenummer: EP0003252
(87) Internationale Veröffentlichungsnummer: WO01000365

(56) Entgegenhaltungen:
- EP-A- 0 882 541
- DE-A- 2 458 656
- US-A- 4 740 668

## Beschreibung

Die Erfindung bezieht sich auf eine Vorrichtung zum Schneiden von Materialbahnen aus Papier oder Kunststoff, insbesondere für auf Flaschen oder ähnliche Behälter aufbringbare Etiketten, nach dem Oberbegriff des Patentanspruchs 1.

Auf Flaschen oder sonstige Behälter aufbringbare Etiketten werden häufig vorkonfektioniert, d. h. fertig geschnitten in die Etikettiervorrichtung gegeben. Etiketten für Kunststoffflaschen hingegen werden meist in Endlosbahnen auf Rollen gehalten und erst unmittelbar vor der Etikettierung konfektioniert. Eine Vorkonfektionierung kommt nicht in Frage, weil die Etikettenlänge mindestens der Umfangslänge der zu etikettierenden Flasche entsprechen soll. Zumeist werden überlappende Enden der Etiketten vorgesehen, damit diese miteinander verklebt werden. Dadurch wird ein vollflächiges Verkleben vermieden.

Es ist bekannt, Etiketten aus Papier oder Kunststoffmaterial herzustellen. Bei Kunststoffflaschen ist aus Umweltgründen die Verwendung von Kunststoffmaterial für das Etikett vorzuziehen, insbesondere aus identischem Material, damit eine Trennung in verschiedene Kunststoffarten entfallen kann. Flaschen aus PET werden daher ebenfalls vorzugsweise mit Etiketten aus PET versehen.

Es ist bekannt, Endlosetikettenbahnen kurz vor Aufbringung der Etiketten auf die Flasche zu schneiden. Auf der der Flasche zugewandten Seite des Etiketts ist eine sog. Abziehvorrichtung vorgesehen, die das ungeschnittene Etikett zur Flasche zieht und dadurch die gesamte Etikettenbahn spannt. Durch ein derartiges Spannen wird erst das Schneiden mit Hilfe von zwei sich gegenläufig von oben und unten von einer Seite hindurch bewegten Messern möglich. Der Schneidvorgang findet bei kontinuierlich vorbewegter Bahn statt. Die Messer müssen daher die Längsbewegung der Bahn kompensieren, um z. B. einen zur Längserstreckung der Etikettenbahn rechtwinkligen Schnitt zu erreichen. Zur Umsetzung dieser Kompensationsbewegung sind die Messer in einem vorgegebenen Winkel zur Bahn angeordnet.

Die herkömmliche Schneidvorrichtung zeichnet sich durch einen niedrigen Einstandsaufwand aus, hat jedoch einige wesentliche Nachteile. Ein Nachteil liegt in der geringen Verschleißfestigkeit der Messer, die in kurzen Zeitabständen ausgewechselt werden müssen. Bei jedem Messerwechsel müssen die Messer erneut justiert werden, was einen erheblichen Aufwand und auch Erfahrung erfordert. Ein weiterer Nachteil ist die Abhängigkeit der Spaltbreite zwischen den Messern von der Raumtemperatur. Es ergibt sich ein erhöhter Aufwand für die Regelung der Raumtemperatur und die Einstellung der Spaltweite.

Die bei derartigen Schneidvorrichtungen verwendeten Messer erwärmen sich im Betrieb, wodurch die Materialbahn beim Schneiden thermisch belastet wird. was zu einem "Fädenziehen" führt. Im ungünstigsten Fall verkleben sich die Messer und müssen daher aufwendig gereinigt werden. Dies reduziert wiederum die Produktivität. Mittels aufgeheizter Messer ist es nicht möglich, Materialbahnen aus PET zu schneiden. Bereits bei geringer thermischer Belastung wird ein mechanischer Schnitt unmöglich. Damit die Schneidmesser einwandfrei arbeiten, ist es unbedingt erforderlich, daß die Messerklingen in einem genauen definierten Abstand zueinander stehen. Die Toleranz für dieses Maß liegt im Bereich weniger 10 µm. Werden die Messer bei Benutzung warm, verändert sich der Abstand naturgemäß. Dies fuhrt ebenfalls zu einem erhöhten Aufwand bei der Konstruktion und der Wartung sowie zu einer geringeren Produktivität.

Aus Dokument EP-A-0 882 541, welches als nächstkommendes Stand der Technik angeschen wird, ist eine Vorrichtung zum Schneiden von Materialbahnen aus Papier, Kunststoff oder dergleichen bekannt geworden, bei der die Materialbahn während ihres Transports im Bereich der Vorrichtung wannenartig verformt wird. Eine Ablenkoptik rotiert auf einer Scheibe, wobei die Rotationsachse in Transportrichtung der zu schneidenden Bahn verläuft. Ein Laser erzeugt einen Strahl, der in der Rotationsachse der Scheibe liegt. Durch Rotation der Optik wird auf diese Weise der Laserstrahl quer zur Vorbewegung der Bahn abgelenkt. In Abhängigkeit von der Drehgeschwindigkeit und der Transportgeschwindigkeit der Bahn wird ein mehr oder weniger winkliger Schnitt der Bahn erzeugt.

Aus US-A-4 740 668 ist eine Vorrichtung bekannt geworden, bei der eine Bahn aus Blech oder dergleichen auf einem Endlostransportband gefördert wird, das perforiert ist und unter Vakuum steht. Auf der anderen Seite des Transportbands ist eine Plasmaschneidvorrichtung angeordnet, die quer zur Transportbahn verfahrbar ist.

Der Erfindung liegt die Aufgabe zugrunde, eine Vorrichtung zum Schneiden von Materialbahnen aus Papier, Kunststoff oder ähnlichem Material zu schaffen, die unabhängig von der Temperatur weitgehend verschleißfrei und somit wartungsfrei arbeitet.

Diese Aufgabe wird durch die Merkmale des Patentanspruchs 1 gelöst.

Bei der erfindungsgemäßen Vorrichtung ist wie bei der bekannten Vorrichtung auf der einen Seite der Materialbahn ein Laser vorgesehen, dessen Fokus im wesentlichen auf der zugekehrten Seite der Materialbahn eingestellt ist. Es ist möglich, mit Hilfe eines leistungsfähigen Lasers ausreichende Leistungsdichte in Höhe der Materialbahn zu erzeugen, um eine Trennung vorzunehmen, welche im wesentlichen auf einem Verdampfen des Materials beruht, auf den der Brennfleck des Laserstrahls gerichtet ist.

Da die Ausdehnung des Brennflecks relativ klein ist, andererseits z. B. Etikettenbahnen eine Breite von 40 bis 200 mm aufweisen, ist es erforderlich, den Laserstrahl bzw. den Brennfleck über die Breite der Materialbahn hinweg zu bewegen. Daher sieht die Erfindung eine Ablenkvorrichtung vor in Form eines X-Y-Galvanometersystems, die den Laserstrahl über die Breite der Materialbahn schwenkt.

Ferner ist auf der anderen Seite der Materialbahn ein perforiertes Transportband aus hitzebeständigem korrosionsbeständigem Material angeordnet, das in dem an der Materialbahn anliegenden Bereich unter Vakuum steht. Als Material für das Transportband dient vorzugsweise Edelstahlblech, das in geeigneter Weise perforiert ist. Es ist um zwei beabstandete Walzen herumgeschlungen. Ein Antrieb der Walzen ist nicht zwingend erforderlich. Die Materialbahn legt sich aufgrund des Unterdrucks an das Transportband an und nimmt dieses mit, wobei der Unterdruck dafür sorgt, daß das Transportband während des Transports eine vorgegebene Lage bzw. seine Lage beibehält. Das Transportband sorgt dafür, daß der Abstand der Materialbahn von dem Laser während des Schnittes reproduzierbar gleich bleibt. Auch die Lage der Materialbahn entlang seiner Querachse wird durch das Transportband fixiert. Mit Hilfe des Vakuums wird gleichzeitig dafür gesorgt, daß das verdampfte Material abgesaugt wird.

Um die Ablenkung des Laserstrahls zu bewerkstelligen, können verschiedene Systeme eingesetzt werden, wie Scanner oder rotierende Polygonspiegel. Da der Trennschnitt während der Bewegung der Materialbahn stattfindet, muß die Geschwindigkeit der Materialbahn kompensiert werden, um einen vorgegebenen Schnittwinkel in der Materialbahn realisieren zu können. Dies erfolgt, indem der Laserstrahl in einem der Bewegungsgeschwindigkeit entsprechenden Winkel über die Materialbahn geführt wird. Der Laserstrahl muß daher entlang zweier Achsen bewegt werden. Hierzu werden zwei Spiegel verwendet, von denen jeweils einer um eine Achse schwenkbar ist, um z. B. in einer X-Y-Ebene die gewünschte Bewegung zu verwirklichen. Derartige Systeme sind wie schon erwähnt, unter der Bezeichnung "X-Y-Galvanometersystem" bekannt. Man bezeichnet derartige Ablenkvorrichtungen auch als Scanner.

Für das Verfahren nach der Erfindung ist es unerheblich, ob die Fokussieroptik vor oder nach dem Ablenken des Strahls, d. h. der Ablenkvorrichtung, angeordnet ist. Es ist jedoch erforderlich, die Laserleistung an die Geschwindigkeit der Materialbahn anzupassen. Eine übliche Geschwindigkeit für Etikettenbahnen liegt bei 10 bis 15 m/s.

Um eine ausreichend gleichmäßige Fokussierung zu erzeugen, wird beim Einsatz der beschriebenen Ablenkvorrichtung eine sog. Plan-Feldoptik verwendet. Diese erzeugt über die Breite der Etikettenbahn einen annähernd gleichbleibenden Fokus unabhängig vom Eintrittswinkel des Laserstrahls in die Fokussieroptik. Die Plan-Feldoptik ist dem Scanner oder der Ablenkvorrichtung nachgeordnet.

Die erfindungsgemäße Vorrichtung ist nahezu ohne Verschleiß und benötigt daher so gut wie keine Wartung. Daher ermöglicht die erfindungsgemäße Vorrichtung eine erhebliche Produktivitätssteigerung. Da der Schnittvorgang extrem schnell abläuft und der Laser das Bahnmaterial vollständig verdampft, verkleben die Enden im Schnittbereich weder miteinander noch mit dem Transportband. Darüber hinaus sorgt die Abziehvorrichtung dafür, daß die abgetrennten Abschnitte schnell voneinander getrennt werden, so daß es nicht zu einem Wiederankleben kommt.

Die Verwendung von poliertem Edelstrahl oder einem ähnlichen Material als Transportband ermöglicht die optimale Nutzung der Laserleistung, da möglicherweise durch die Materialbahn hindurch gestrahlte Laserstrahlung von der Edelstahloberfläche zurück in die Materialbahn reflektiert wird.

Die gesamte Vorrichtung kann in einem Schutzgehäuse untergebracht werden, das dafür sorgt, daß keinerlei Laserstrahlung aus dem Arbeitsbereich austritt und Bedienungspersonen gefährdet.

Die Erfindung wird nachfolgend anhand von Zeichnungen näher erläutert.
- Fig. 1: zeigt äußerst schematisch eine Vorrichtung nach der Erfindung.
- Fig. 2: zeigt eine Ansicht der Vorrichtung nach Fig. 1 in Richtung Pfeil 2.
- Fig. 3: zeigt äußerst schematisch eine Schaltungsanordnung für den Betrieb der Vorrichtung nach der Erfindung.

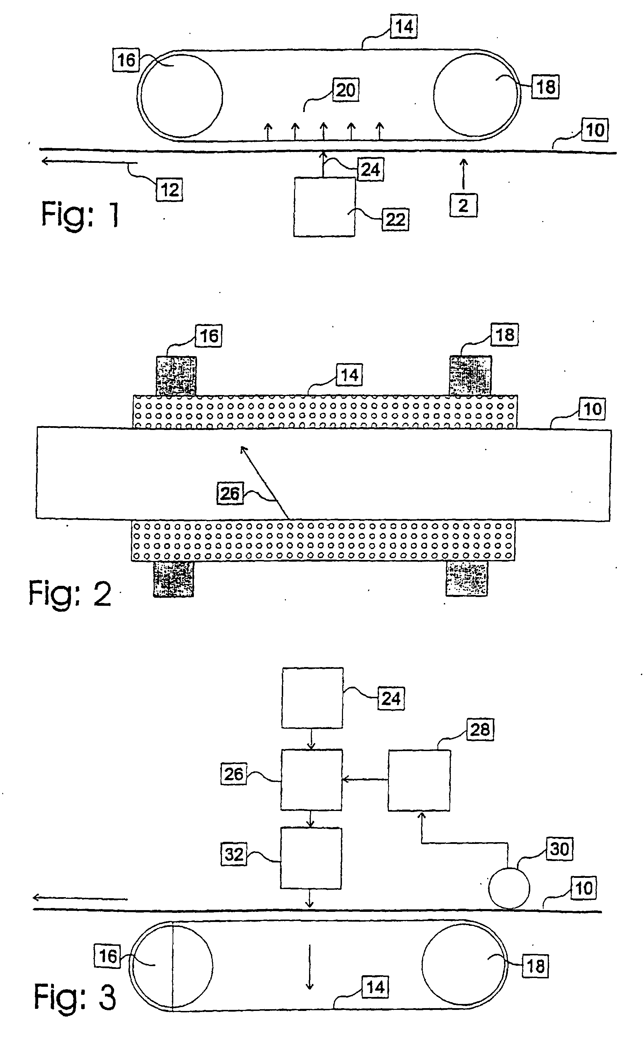

In Fig. 1 und 2 ist eine Materialbahn 10 aus Folienmaterial gezeigt, beispielsweise aus PET, zur Herstellung von Etiketten. Die Bewegungsrichtung der Materialbahn 10 ist in Richtung Pfeil 12, d. h. in den Fig. 1 und 2 von rechts nach links. Oberhalb der Materialbahn 10 ist ein Transportband 14 angeordnet, das aus gelochtem Edelstahlblech besteht und um zwei Umlenkwalzen 16, 18 herumgeführt ist. Zwischen Transportband 14 und Materialbahn 10 ist ein Vakuum aufgebaut, was durch die Pfeile 20 angedeutet sein soll. Auf der gegenüberliegenden Seite der Materialbahn 10 ist ein Laser 22 angeordnet, dessen Strahl 24 auf die Bahn gerichtet ist.

Soll ein Schnitt durch die Materialbahn 10 senkrecht zur Förderrichtung und Längserstreckung vorgenommen werden und bewegt sich die Materialbahn 10 in einer vorgegebenen Geschwindigkeit, dann muß der Laserstrahl 24, der lediglich in einem Brennfleck auf die Materialbahn 10 auftrifft, entlang einer Linie abgelenkt werden, welche diagonal verläuft, wie dies bei 26 in Fig. 2 angedeutet ist. Die Winkel des diagonalen Verlaufs hängen naturgemäß von der Bahngeschwindigkeit ab.

Der Laserstrahl 24 ist auf der zugekehrten Seite der Materialbahn 10 genauestens fokussiert, was mit Hilfe geeigneter an sich bekannter Optiken ohne weiteres möglich ist. Das Transportband 14 sorgt dafür, daß die Materialbahn 10 in ihrer Lage fixiert ist. Die Energie des Laserstrahls 24 reicht aus, das Material im jeweils bestrahlten Bereich zu verdampfen. Die Emissionsprodukte werden durch das Vakuum abgesaugt und in einem geeigneten Filtersystem abgeschieden.

In Fig. 3 ist gezeigt, wie der Laserstrahl des Lasers 24 mit Hilfe einer Ablenkvorrichtung 26 quer zur Bahn 10 abgelenkt wird. Wie weiter oben bereits beschrieben, kann die Ablenkvorrichtung ein X-Y-Galvanometersystem sein oder auch cin Polygonspiegel, der mit Hilfe eines Motors in schnelle Umdrehung versetzt ist. Der Winkel, um den eine Ablenkung erfolgt, kann mit Hilfe einer nicht gezeigten Verstellvorrichtung in der Ablenkeinrichtung 26 eingestellt werden. Dies wird über eine Steuerung 28 durchgeführt, die ein Signal von einem Inkrementalgeber 30 erhält, welcher die Geschwindigkeit der Materialbahn 10 mißt. Ändert sich die Geschwindigkeit, ändert sich auch der Winkel, um den der Laserstrahl quer zur Bahn 10 abgelenkt wird, um einen vorgegebenen Schnittwinkel zu erhalten. Der Ablenkvorrichtung 26 ist eine Plan-Feldoptik 32 nachgeordnet, welche dafür sorgt, daß unabhängig vom Winkel des Laserstrahls eine gleichbleibende Fokussierung erhalten wird.

Zum Schneiden von Abschnitten gleichbleibender Länge muß die Ablenkvorrichtung den Laserstrahl periodisch über die Materialbahn schwenken, wobei die Periodendauer ebenfalls von der Bahngeschwindigkeit abhängt.

## Patentansprüche

1. Vorrichtung zum Schneiden von Materialbahnen aus Papier, Kunststoff oder dergleichen, insbesondere für auf Flaschen oder ähnliche Behälter aufbringbare Etiketten, mit einer Abziehvorrichtung, die die Materialbahn (10) unter Vorspannung tangential von einer Vorratsrolle abzieht, einer Schneidvorrichtung in Transportrichtung vor der Abziehvorrichtung, die die Materialbahn (10) durch einen Schnitt mit vorgegebenem Schnittwinkel zur Längserstreckung der Materialbahn (10) durchtrennt, wobei auf einer Seite der Materialbahn (10) ein Laser (24) angeordnet ist, dessen Strahl über eine optische Anordnung im wesentlichen auf die zugekehrte Seite der Materialbahn (10) fokussiert ist, eine Ablenkvorrichtung (26) den Laserstrahl über die Breite der Materialbahn (10) schwenkt und auf der anderen Seite der Materialbahn (10) ein Träger angeordnet ist, **dadurch gekennzeichnet, daß** der Träger ein perforiertes Transportband (14) aus hitzebeständigem korrosionsresistentem Material ist, das in dem an der Materialbahn (10) anliegenden Bereich unter Vakuum (20) steht, die Ablenkvorrichtung (26) ein X-Y-Galvanometersystem aufweist und zwischen dem Laser (24) und der Materialbahn (10) eine Plan-Feldoptik (32) angeordnet ist.

2. Vorrichtung nach Anspruch 1, **dadurch gekennzeichnet, daß** das Transportband (14) aus Edelstahlblech besteht, das um im Abstand voneinander drehbar gelagerte Walzen (16, 18) herumgeführt ist.

3. Vorrichtung nach Anspruch 1 oder 2, **dadurch gekennzeichnet, daß** der Winkel zur Längserstreckung der Materialbahn (10), unter dem die Ablenkvorrichtung (26) den Laserstrahl schwenkt, veränderbar ist.

4. Vorrichtung nach Anspruch 3, **dadurch gekennzeichnet, daß** eine von einer Steuervorrichtung (28) steuerbare Verstellvorrichtung für die Einstellung des Winkels vorgesehen ist und eine Geschwindigkeitsmeßvorrichtung (30) vorgesehen ist, die die Geschwindigkeit der Materialbahn (10) mißt und ein Geschwindigkeitssignal für die Steuervorrichtung (28) erzeugt zwecks Einstellung des Winkels abhängig von der Geschwindigkeit der Materialbahn.

## Claims

1. A device for cutting material webs of paper, plastic material or the like, particularly for labels applicable to bottles or similar containers, comprising a draw-off device which tangentially draws the material web (10) off a supply roll under a bias, a cutting device located in the direction of transport in front of the draw-off device which splits up the material web (10) by cutting at a predetermined cutting angle from the longitudinal extension of the the material web (10), wherein one side of the material web (10) has disposed thereon a laser (24) the beam of which is focused substantially onto the side of the material web (10) facing it via an optical assembly, a deflection device (26) swivels the laser beam across the width of the material web (10), and a carrier is disposed on the other side of the material web (10), **characterized in that** the carrier is a perforated belt conveyor (14) made of a heat-resistant, corrosion-resistant material which is under a vacuum (20) in the region adjoining the material web (10), the deflection device (26) has an X-Y galvanometer system, and a plane field optical system (32) is disposed between the laser (24) and the material web (10).

2. The device as claimed in claim 1, **characterized in that** the belt conveyor (14) is made of high-grade sheet steel which is led around rolls (16, 18) which are rotatably supported at a distance from each other.

3. The device as claimed in claim 1 or 2, **characterized in that** the angle from the longitudinal extension of the material web (10) under which the deflection device (26) swivels the laser beam is variable.

4. The device as claimed in claim 3, **characterized in that** an adjusting device controllable by a control device (28) is provided to set the angle and a speed measuring device (30) is provided which measures the speed of the material web (10) and generates a speed signal for the control device (28) to set the angle in dependence on the speed of the material web.

## Revendications

1. Dispositif pour découper des bandes de matière en papier, en matière plastique ou similaire, en particulier pour des étiquettes à appliquer sur des bouteilles ou des récipients analogues, comportant un dispositif de retirement qui retire d'un rouleau de stockage la bande de matière (10) sous précontrainte tangentiellement, dans la direction de transport avant le dispositif de retirement un dispositif de découpe qui découpe la bande de matière (10) par une coupure présentant un angle de coupe prédéfini par rapport à la direction longitudinale de la bande de matière (10), un laser (24) étant disposé sur un côté de la bande de matière (10), laser dont le rayon est focalisé par l'intermédiaire d'un dispositif optique essentiellement sur le côté adjacent de la bande de matière (10), un dispositif de déviation (26) faisant dévier le rayon laser sur la largeur de la bande de matière (10), et un support étant disposé sur l'autre côté de la bande de matière (10),
**caractérisé en ce que**
le support est une bande de transport perforée (14), constituée d'un matériau résistant à la corrosion et à la chaleur, qui est placé sous vide (20) dans la zone située contre la bande de matière (10), que le dispositif de déviation (26) présente un système de galvanomètre X-Y et qu'entre le laser (24) et la bande de matière (10) est disposée une optique à champ plan (32).

2. Dispositif suivant la revendication 1, **caractérisé en ce que** la bande de transport (14) est constituée d'une tôle d'acier inoxydable, qui est guidée autour de rouleaux (16, 18) montés à rotation à distance l'un de l'autre.

3. Dispositif suivant la revendication 1 ou 2, **caractérisé en ce que** l'angle par rapport à l'extension longitudinale de la bande de matière (10) sous lequel le dispositif de déviation (26) fait dévier le rayon laser, peut être modifié.

4. Dispositif suivant la revendication 3, **caractérisé en ce qu'**il est prévu un dispositif de réglage, commandable par un dispositif de commande (28), pour le réglage de l'angle, et un dispositif de mesure de la vitesse (30), qui mesure la vitesse de la bande de matière (10) et qui produit un signal de vitesse pour le dispositif de commande (28), dans le but de régler l'angle en fonction de la vitesse de la bande de matière.
